# EUROPÄISCHE PATENTANMELDUNG

(11) **EP 2 755 450 A2**
(43) Veröffentlichungstag der Anmeldung: **16.07.2014**
(21) Anmeldenummer: 14150703.8
(22) Anmeldetag: 10.01.2014
(51) Int. Cl.: H05B 37/02

(54) **Fernansteuerung einer Lampe**

(30) Priorität: 11.01.2013 AT 500112013
(71) Anmelder: Lunatone Industrielle Elektronik GmbH, 1220 Wien (AT)
(72) Erfinder: Mair, Alexander, 2285 Breitstetten (AT)
(74) Vertreter: Matschnig, Franz

(57) **Zusammenfassung**

Fernansteuerung (3) für zumindest eine Speiseelektronik (2) zumindest einer Lampe (1), wobei in einem der Lampe zugeordneten Lampengehäuse/Lampensockel ein Leuchtmittel untergebracht ist, wobei ein Mittel (4) zur Erzeugung eines Spannungsabfalls in Serie mit der Speiseelektronik (2) an eine Netzwechselspannung Un geschaltet ist und der Spannungsabfall zur Energieversorgung der Fernansteuerung (3) herangezogen ist.

## Beschreibung

Die Erfindung betrifft eine Fernansteuerung für zumindest eine Speiseelektronik zumindest einer Lampe, wobei in einem der Lampe zugeordneten Lampengehäuse/Lampensockel ein Leuchtmittel untergebracht ist.

Fernansteuerungen der gegenständlichen Art sind bekannt, wobei die Energieversorgung der Fernansteuerung beispielsweise über wechselbare Batterien, wiederaufladbare Akkumulatoren und/oder über ein mit einem Energieversorgungsnetz verbundenes Netzteil erfolgt. Mobile Fernansteuerungen werden üblicherweise mittels Batterien oder Akkumulatoren versorgt. Nach erfolgter Entladung müssen diese Energiespeicher entweder ausgetauscht (Batterien) oder neu geladen werden (Akkumulatoren), um einen weiteren Betrieb der Fernansteuerung zu ermöglichen. Dies ist mit einem gewissen manuellen Aufwand und dem Risiko verbunden, dass für die Zeitdauer des Batteriewechsels oder der Akkumulatorenladung (oder des Akkumulatorentausches) die Funktion der Fernansteuerung nicht gewährleistet ist. Fest installierte Fernansteuerung hingegen verfügen häufig über Netzteile, die eine Versorgungsspannung, häufig eine Wechselspannung mit einem Effektivwert von 230 V, auf ein zur Versorgung der Fernansteuerung geeignetes Spannungsniveau übersetzen. Solche Netzteile sind einerseits dazu geeignet eine Fernansteuerung konstant mit Energie zu versorgen und einen dauerhaften und wartungsfreien Betrieb zu ermöglichen, andererseits weisen diese eine hohe Anzahl an elektrischen Bauteilen auf. Dies ist mit entsprechenden Kosten verbunden. Darüber hinaus verbrauchen derartige Netzteile auch dann elektrische Energie, wenn die Fernansteuerung bzw. eine dadurch angesteuerte Lampe nicht in Betrieb ist (Standby-Versorgung).

Es ist daher eine Aufgabe der Erfindung eine Fernansteuerung zu schaffen, die zuverlässig und wartungsfrei funktioniert, kostengünstig und einfach realisierbar ist und einen niedrigen Energieverbrauch aufweist.

Diese Aufgabe wird mit einer Fernansteuerung bzw. einer Fernansteuerungseinrichtung, die eine Energieversorgung beinhaltet, der eingangs genannten Art gelöst, bei welcher erfindungsgemäß ein Mittel zur Erzeugung eines Spannungsabfalls in Serie mit der (Leuchtmittel-)Speiseelektronik an eine Netzwechselspannung Un geschaltet ist und der Spannungsabfall zur Energieversorgung der Fernansteuerung herangezogen ist.

Durch die erfindungsgemäßen Merkmale ist es möglich, eine wartungsfreie Fernansteuerung mit geringem Energieverbrauch und hoher Zuverlässigkeit kostengünstig zu realisieren. Durch die Serienschaltung des Mittels zu Erzeugung eines Spannungsabfalls mit der Speiseelektronik der zumindest einen Lampe kann gewährleistet werden, dass während der Zeitdauer, in der die zumindest eine Lampe nicht in Betrieb ist und die Speiseelektronik somit in einen hochohmigen Zustand wechselt, der Energieverbrauch des Mittels zur Erzeugung des Spannungsabfalls praktisch vernachlässigbar gering ist. Unter dem Begriff "Spannungsabfall" wird eine elektrische Potentialdifferenz verstanden. Während des Betriebs der zumindest einen Lampe entsteht hingegen ein Spannungsabfall an dem Mittel zur Erzeugung eines Spannungsabfalls, der zur Energieversorgung der Fernansteuerung herangezogen werden kann. Das Ausmaß dieses Spannungsabfalls ist allerdings so gering, dass die Funktion der Speiseelektronik der zumindest einen Lampe nicht beeinflusst wird. Die Beeinflussung bzw. Steuerung der Speiseelektronik erfolgt über die Fernansteuerung und nicht über eine Beeinflussung der Energieversorgung der Speiseelektronik. Unter dem Begriff "Fernansteuerung" wird - jedenfalls im Rahmen der vorliegenden Erfindung - eine Anordnung verstanden, die zumindest einen elektrischen Schaltkreis mit aktiven elektrischen Bauelementen aufweist, wobei der zumindest eine elektrische Schaltkreis beispielsweise als integrierter Schaltkreis realisiert werden kann und die Anordnung dazu eingerichtet ist, Informationen direkt (z.B. über Funksignale) oder indirekt (beispielsweise über eine Modulationseinheit) an die Speiseelektronik zu übermitteln. Aktive elektrische Bauelemente sind aus dem Stand der Technik bekannt und können beispielsweise Transistoren, Optokoppler oder Dioden sein. Vorzugsweise ist in einem integrierten Schaltkreis (IC) eine Vielzahl an Bauelementen, insbesondere an aktiven elektrischen Bauelementen zu einem oder mehreren Schaltkreisen zusammengefasst. Die Fernansteuerung der gegenständlichen Erfindung ist daher eine aktive Fernansteuerung.

In einer besonders einfachen Realisierung der erfindungsgemäßen Fernansteuerung besteht das Mittel zur Erzeugung eines Spannungsabfalls aus zumindest zwei antiparallel geschalteten Dioden oder aus zumindest zwei seriell in Gegenrichtung geschalteten Zenerdioden.

In einer alternativen Realisierung der erfindungsgemäßen Fernansteuerung besteht das Mittel zur Erzeugung eines Spannungsabfalls aus einer Zenerdiode. Es ist dadurch in einfacher Weise möglich, stromrichtungsabhängige Spannungsabfälle in unterschiedlicher Höhe zu erzeugen.

Dabei ist das Mittel zur Erzeugung eines Spannungsabfalls vorteilhaft so ausgestaltet, dass daran bei Betrieb der zumindest einen Lampe eine Spannung zwischen 0,5 und 3 Volt abgegriffen werden kann.

Darüber hinaus kann vorgesehen sein, dass das Mittel zur Erzeugung eines Spannungsabfalls mit einem Gleichrichter verbunden ist, welcher einen Hochsetzsteller speist, welcher Hochsetzsteller mit der Fernansteuerung verbunden ist. Alternativ kann die Fernansteuerung auch direkt mit dem Gleichrichter verbunden sein.

In einer Weiterbildung der Erfindung ist der Gleichrichter ein Schottky-Dioden-Brückengleichrichter. Die geringe Durchlassspannung von Schottky-Dioden ermöglicht dabei eine besonders effiziente Gleichrichtung.

In einer vorteilhaften Ausführungsform ist der Gleichrichter ein Mittelpunktgleichrichter.Der Spannungsabfall in positiver und negativer Richtung wird dabei summiert und somit nahezu verdoppelt (Spannungsabfälle an Dioden bewirken die Abweichung von dem doppelten Wert).

Alternativ dazu könnte der Gleichrichter auch als eine Delonschaltung, Spannungsvervielfacherschaltung oder als Spannungskaskade ausgebildet oder mit dieser verbunden sein.

In einem weiteren Aspekt der Erfindung ist ein Schalter parallel zu dem Mittel zur Erzeugung eines Spannungsabfalls geschaltet. Dieser Schalter ist dazu geeignet, das Mittel zur Erzeugung eines Spannungsabfalls im geschlossenen Schalterzustand zu überbrücken (kurz zu schließen), wodurch das Mittel zur Erzeugung eines Spannungsabfalls außer Betrieb gesetzt wird und somit keine Energie verbraucht. Dieser Schalter kann manuell bedient oder durch die Fernansteuerung abhängig von deren Zustand (Schalter öffnen wenn Ladung notwendig ist) gesteuert werden.

Um die Fernansteuerung auch während der Zeitdauer, in der die zumindest eine Lampe nicht in Betrieb ist, mit elektrischer Energie zu versorgen, ist in einer vorteilhaften Ausführung der Erfindung vorgesehen, dass die Fernansteuerung einen wiederaufladbaren Energiespeicher, beispielsweise einen Kondensator aufweist. Eine kontinuierliche, dauerhafte Betriebsfähigkeit der Fernansteuerung setzt somit keine lückenlose Energieversorgung durch das Mittel zur Erzeugung eines Spannungsabfalls voraus. Sinkt die Energie im Speicher unter eine definierte Grenze kann durch automatisches Einschalten der Leuchte eine Nachladung erfolgen.

Bei einer Netzunterbrechung wird der Betriebszustand der Leuchte in einem der Fernansteuerung zugeordneten Funkmodul gespeichert. Bei Netzwiederkehr schaltet die Speiseelektronik das Leuchtmittel grundsätzlich ein. Nachdem die Spannungsversorgung des Funkmoduls sichergestellt ist stellt dieses dann den abgespeicherten Betriebszustand wieder her.

Eine besonders energiesparende Variante der Erfindung ist gegeben, wenn das Leuchtmittel zumindest eine LED aufweist. Aufgrund der Serienschaltung des Mittels zur Erzeugung des Spannungsabfalls mit der Speiseelektronik ist der Energieverbrauch des Mittels proportional zu dem Spannungsabfall am Mittel sowie zu dem Speisestrom, der durch die Speiseelektronik fließt. Die hohe Effizienz von LED's ermöglicht somit einen niedrigen Speisestrom, womit der Energieverbrauch des Mittels zur Erzeugung des Spannungsabfalls sinkt. Im Sinne der Erfindung sind auch beliebige andere Leuchtmittel besonders geeignet, die eine hohe Energieeffizienz aufweisen. Beispielhaft seien an dieser Stelle Gasentladungsröhren erwähnt. Generell sind alle Arten von Signalleuchten mit geringer Leistung als Leuchtmittel geeignet.

In einer günstigen Variante der Erfindung steuert die Fernansteuerung mehrere jeweils eine Speiseelektronik umfassende Speiseelektronikeinheiten, die jeweils einer Lampe zugeordnet sind. Es können somit mehrere Lampen durch eine gemeinsame Fernansteuerung geregelt werden, wobei eine Lampe und deren zugeordneten Speiseelektronikeinheit räumlich getrennt zu einer weiteren Lampe mit zugeordneter Speiseelektronikeinheit angeordnet sein kann.

Um eine besonders kompakte Bauform der Lampe zu ermöglichen und eine einfache, geschützte Positionierung der Speiseelektronik zu erreichen, ist in einer vorteilhaften Ausführungsform der Erfindung vorgesehen, dass die Speiseelektronik innerhalb des Lampensockels angeordnet ist.

Alternativ dazu kann es vorgesehen sein, dass die Speiseelektronik innerhalb des Lampengehäuses angeordnet ist. Zusätzlich zu den genannten Vorteilen der kompakten Bauform und der einfachen geschützten Positionierung kommt bei dieser Variante hinzu, dass die Speiseelektronik besonders exponiert ist, wodurch beispielsweise Funksignale besonders gut empfangen werden können.

In einer weiteren Ausführungsform der Erfindung ist eine Speiseelektronik mit mehreren Lampen verbunden, wodurch eine erhöhte Beleuchtungsstärke und/oder eine umfangreichere Beleuchtung kostengünstig realisiert werden kann.

In einem weiteren Aspekt der Erfindung ist es vorgesehen, dass die Fernansteuerung ein Funkmodul mit einer Antenne beinhaltet und die zumindest eine Speiseelektronik mittels Funksignalen steuert. Die Übertragung von Steuersignalen an die Speiseelektronik kann somit ohne Steuerkabel und besonders einfach erfolgen.

Alternativ dazu kann die Fernansteuerung die Speiseelektronik auch über deren Energieversorgungsleitung steuern, indem eine Modulationseinheit mit der Fernansteuerung verbunden und mit zumindest einer Speiseelektronik in Serie geschaltet und somit mit der zumindest einen Speiseelektronik verbunden ist, wobei die Fernansteuerung leitungsgebundene modulierten Hochfrequenzsignale der Modulationseinheit vorgibt, welche die zumindest eine Speiseelektronik steuern. Bei dieser Variante bedarf es daher keiner zusätzlichen Signalverbindung zwischen der Fernansteuerung und der Speiseelektronik.

Um die Leistungsaufnahme des Mittels zur Erzeugung des Spannungsabfalls sowie der Speiseelektronik zuverlässig zu begrenzen, ist in einer vorteilhaften Ausführung der Erfindung Sicherungselement mit dem Mittel zur Erzeugung eines Spannungsabfalls sowie mit der Speiselektronik in Serie geschaltet. Bei dem Sicherungselement kann es sich beispielsweise um eine Schmelzsicherung oder einen Kaltleiter handeln. Überströme können somit in einfacher Weise vorgebeugt werden.

Des Weiteren kann in sämtlichen Ausführungsformen der Erfindung vorgesehen sein, dass ein Kondensator parallel zu der Speiseelektronik und/oder zur Lampe geschaltet ist. Dadurch kann auch außerhalb der Betriebszeit einer Lampe ein Spannungsabfall an dem Mittel zur Erzeugung eines Spannungsabfalls erreicht werden, um erfindungsgemäß die Energieversorgung der Fernansteuerung sicherzustellen.

Die Erfindung samt weiteren Vorteilen ist im Folgenden anhand mehrerer beispielhafter und nicht einschränkender Ausführungsformen näher erläutert, die in den Figuren veranschaulicht sind. Dabei zeigen
Fig. 1 ein Blockschaltbild einer Fernansteuerung nach der Erfindung,
Fig. 2 eine erste Ausführungsform einer Energieversorgung der Fernansteuerung,
Fig. 3 eine zweite Ausführungsform der Energieversorgung der Fernansteuerung,
Fig. 4 eine dritte Ausführungsform der Energieversorgung der Fernansteuerung (Hochsetzsteller),
Fig. 5 eine erste Ausführungsform eines Mittels zur Erzeugung eines Spannungsabfalls,
Fig. 6 eine zweite Ausführungsform des Mittels zur Erzeugung eines Spannungsabfalls,
Fig. 7 eine dritte Ausführungsform des Mittels zur Erzeugung eines Spannungsabfalls,
Fig. 8 eine vierte Ausführungsform des Mittels zur Erzeugung eines Spannungsabfalls und
Fig. 9 eine fünfte Ausführungsform des Mittels zur Erzeugung eines Spannungsabfalls in Verbindung mit einer zugehörigen weiteren Ausführungsform der Energieversorgung.

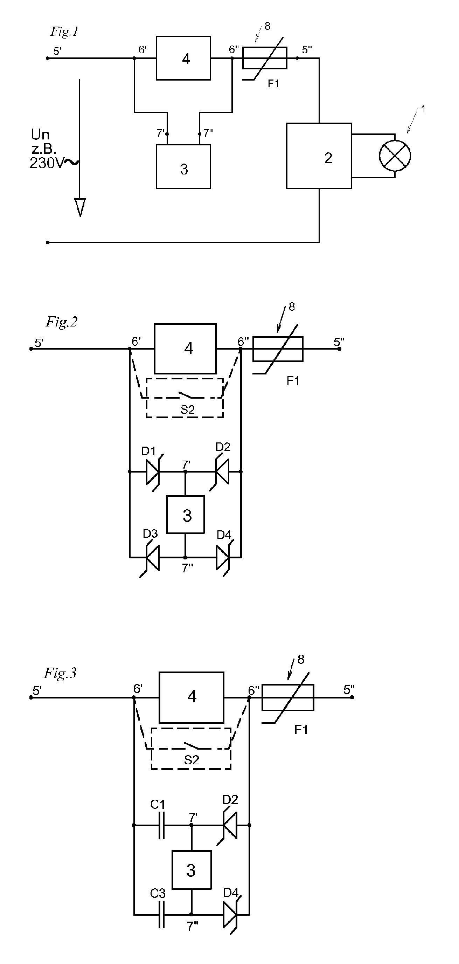

Fig. 1 zeigt ein Blockschaltbild einer Fernansteuerung 3 nach der Erfindung. Eine Netzwechselspannung Un mit einem Effektivwert von beispielsweise 230V versorgt darin eine Speiseelektronik 2, die dazu eingerichtet ist, eine mit der Speiseelektronik 2 verbundene Lampe 1 mit elektrischer Energie zu versorgen und hinsichtlich deren abgestrahlten Lichtintensität, Lichttemperatur und Lichtfarbe zu steuern. Hierfür sendet die Fernansteuerung 3 Steuersignale an die Speiseelektronik 2, wobei die Speiseelektronik 2 diese Steuersignale in ein der Lampe 1 zugeordnetes Versorgungssignal umsetzt. Die Speiseelektronik 2 verfügt hierzu über einen Empfänger, der die Steuersignale der Fernansteuerung 3 empfängt.

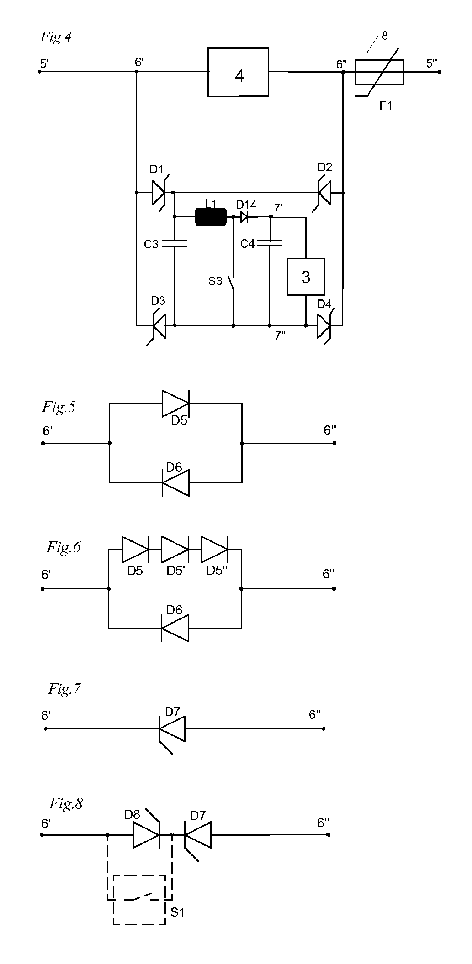

In Serie zu der Speiseelektronik 2 befindet sich ein Mittel 4 zur Erzeugung eines Spannungsabfalls (des Weiteren kurz als "Mittel 4" bezeichnet) sowie ein Sicherungselement 8. Bei dem Sicherungselement 8 kann es sich beispielsweise um eine Schmelzsicherung oder um einen Kaltleiter (PTC- Widerstand) handeln. Als Mittel 4 zur Erzeugung eines Spannungsabfalls sind im Allgemeinen sämtliche elektrische Bauteile und Anordnungen derselben geeignet, die über einen ausreichend niedrigen elektrischen Widerstand verfügen, sodass der Spannungsabfall am Mittel 4 deutlich niedriger als jener an der Speiseelektronik 2 ist. So kann der Spannungsabfalls am Mittel 4 bei einer Versorgungsspannung Un von 230V typischerweise zwischen 0 und 5 V betragen, beispielsweise 0,6V, 0,7V, 1V, 1,5V, 2V, 3V, 4V oder 5V. Der Spannungsabfall am Mittel 4 ist im Sinne eines hohen Wirkungsgrades der Fernansteuerung 3 sowie der Lampenanordnung möglichst gering zu halten. Als Mittel 4 zur Erzeugung eines Spannungsabfalls sind daher insbesondere elektrische Widerstände und Halbleiterbauelemente wie Dioden geeignet. In den Figuren 5 bis 9 sind hierzu beispielhafte Ausführungsformen dargestellt. Die Fernansteuerung 3 ist über Anschlüsse 7' und 7" mit dem Mittel 4 verbunden, wobei in der in Fig. 1 gezeigten Ausführungsform diese jeweils direkt mit Anschlüssen 6' und 6" des Mittels 4 verbunden sind. Die Serienschaltung des Mittels 4 mit dem zugehörigen Sicherungselement 8 weist zwei in Fig. 1 gezeigte Anschlüsse 5' und 5" auf. Das Sicherungselement 8 stellt ein optionales Bauelement dar, das die Betriebssicherheit der Anordnung erhöht und nicht zwingend vorgesehen sein muss.

Fig. 2 zeigt eine erste Ausführungsform der Energieversorgung der Fernansteuerung 3, in welcher eine Dioden-Brücken-Gleichrichterschaltung parallel zu dem Mittel 4 geschaltet ist und die Fernansteuerung 3 mit Gleichspannung versorgt. Die Brücke verfügt dabei über vier Schottky-Dioden (D1, D2, D3 und D4), die aufgrund deren niedrigen Durchlassspannung eine besonders effiziente Versorgung ermöglichen. Alternativ dazu könnten auch herkömmliche Dioden verwendet werden. Die Schottky-Dioden D1 bis D4 sind auf zwei Brückenzweige aufgeteilt, wobei je Brückenzweig zwei Schottky-Dioden (D1 und D2 bzw. D3 und D4) in Gegenrichtung geschaltet sind, wobei in einem Zweig die Durchlassrichtungen zueinander weisen (D1 und D2) und im anderen Zweig die Durchlassrichtungen voneinander abweisend sind (D3 und D4). Die Brückenzweige sind an deren Enden miteinander sowie mit den Anschlüssen 6' und 6" in dargestellter Weise verbunden. Die Fernansteuerung 3 ist zwischen die Brückenzweige geschaltet, wobei ein Stromfluss zur Fernansteuerung 3 je nach Flussrichtung über das Diodenpaar D1 und D4 oder D2 und D3 erfolgt. Ein mit den Anschlüssen 6' und 6" verbundener optionaler elektrischer Schalter 2 ist dazu eingerichtet, in einem geschlossenen Zustand das Mittel 4 zu überbrücken und somit eine Spannung von 0V am Mittel 4 zu erzwingen. Die Energieversorgung der Fernansteuerung 3 über das Mittel 4 ist bei geschlossener Schalterstellung des Schalters S2 unterbrochen und das Mittel 4 setzt keine elektrische Leistung um.

Eine zweite Ausführungsform der Energieversorgung der Fernansteuerung 3 ist Fig. 3 entnehmbar. Darin wurden die zwei Schottky-Dioden D1 und D3 der in Fig. 2 gezeigten ersten Ausführungsform durch zwei Kondensatoren C1 und C3 ersetzt, wodurch die Spannung zwischen den Anschlüssen 7' und 7" der Fernansteuerung 3 durch Energiespeicherung in den Kondensatoren zusätzlich erhöht werden kann. Der der Fernansteuerung 3 zufließende Strom gelangt analog zu Fig. 2 ausschließlich über die Paare C1 und D4 sowie D2 und C3 zu der Fernansteuerung 3. Während des leitenden Zustands von D2 lädt sich gleichzeitig der Kondensator C1, der während des leitenden Zustands von D4 die Spannung an der Fernansteuerung 3 erhöht. Analog dazu lädt sich während des leitenden Zustands von D4 der Kondensator C3. Die Anordnung der Bauteile C1, D2, C3 und D4 sowie der zugeordneten Anschlüsse 6', 6", 7', 7" wird im Sinne dieser Beschreibung auch als Mittelpunktgleichrichter bezeichnet. Für die übrigen Merkmale gilt das in der ersten Ausführungsform Gesagte.

Fig. 4 zeigt eine dritte Ausführungsform der Energieversorgung der Fernansteuerung 3, in der ein Schottky-Dioden-Brückengleichrichter im Gegensatz zur Fig. 2 einen Hochsetzsteller (und nicht direkt die Fernansteuerung 3) speist, wobei der Hochsetzsteller die Fernansteuerung 3 versorgt. Somit kann das an der Fernansteuerung 3 gewünschte Spannungsniveau in einfacher Weise (zeitlich variabel) bereitgestellt werden. Der Hochsetzsteller besteht dabei unter anderem aus zweien die Spannung stabilisierenden Kondensatoren C3 und C4, wobei eine Glättungsdrossel (Induktivität) L1 als magnetischer Energiespeicher fungiert, deren Stromfluss sich entweder über den Schalter S3, oder über zur Induktivität L1 in Serie geschaltete Diode und die Last (Fernansteuerung 3) schließt, und/oder den Kondensator C4 lädt. Das Tastverhältnis, also die Zeitdauerverhältnis der geschlossenen Schalterstellung in Bezug auf die offene Schalterstellung des Schalters S3, ist maßgebend für die Spannung am Kondensator C4 sowie an der Fernansteuerung 3. Für die übrigen Merkmale gilt das in der ersten Ausführungsform Gesagte.

Die Fig. 5 bis 8 sollen nur schematisch verschiedene Möglichkeiten zur Ausbildung des Mittels 4 veranschaulichen. So ist in Fig. 5 eine Schaltung zweier antiparalleler Dioden D5 und D6 (gemäß einer ersten Ausführungsform) erkennbar. Alternativ dazu können auch mehrere Dioden antiparallel geschaltet sein, um den Bahnwiderstand des Mittels 4 zu verringern. In einer zweiten Ausführungsform gemäß Fig. 6 sind in einem Brückenzweig mehrere Dioden (im gezeigten Fall D5, D5' und D5") in Serie geschaltet, wobei der antiparallele Brückenzweig lediglich eine einzelne Diode (D6) aufweist. Es kann auf diese Art ein hinsichtlich der Durchlassrichtungen asymmetrischer Spannungsabfall am Mittel 4 erzielt werden. Auch kann die Höhe des Spannungsabfalls an beiden Brückenzweigen (entsprechend den beiden Durchlassrichtungen) variiert werden. Dieser asymmetrische Spannungsabfall kann auch in einfacher Weise durch Anwendung einer dritten Ausführungsform gemäß Fig. 7 erzielt werden, in der eine Zenerdiode D7 das Mittel 4 darstellt. Eine Weiterbildung dieses Gedankens ist in einer vierten Ausführung gemäß Fig. 8 gezeigt, in der das Mittels 4 aus in Gegenrichtung geschalteten Zenerdioden D7 und D8 besteht und ein optionaler Schalter S1 vorgesehen ist, um eine Zenerdiode bei Bedarf kurz zu schließen. Das Überbrücken der Diode führt einerseits zu einer geringeren Verlustleistung aber auch zu einem Gleichanteil an der Speiseelektronik. Das kann benutzt werden, um der Speiseelektronik das Vorhandensein des Funkmoduls mitzuteilen und/oder diese in einen Adressiermodus zu versetzen.

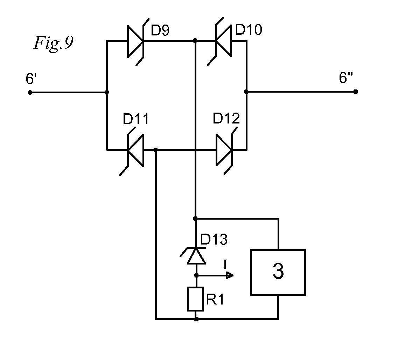

Eine fünfte Ausführungsform des Mittels 4 sowie einer zugehörigen Energieversorgung für die Fernansteuerung 3 ist Fig. 9 entnehmbar. Ein Schottky-Dioden-Brückengleichrichter bestehend aus den Dioden D9 bis D12 ist darin seriell mit einer Zenerdiode D13 sowie einem niederohmigen Shuntwiderstand R1 verbunden, wobei die Fernansteuerung 3 parallel zu der Serienschaltung aus Zenerdiode D13 und Shuntwiderstand R1 geschaltet ist. Der Betriebsstrom der Lampe 1 fließt im Wesentlichen über die Schottky-Dioden-Paare D9 und D12 sowie D10 und D11 sowie seriell dazu über die Serienschaltung aus Zenerdiode D13 und Shuntwiderstand R1, wodurch ein dem Stromfluss proportionaler Spannungsabfall am Shuntwiderstand R1 erzielt wird. Dieser Spannungsabfall kann ausgewertet und dazu verwendet werden, ein Feedback für die Fernansteuerung 3 insbesondere zur Leistungsregelung und/oder Leistungsbegrenzung vorzusehen.

Die Übertragung der Steuersignale kann z. B. in bekannter Weise in Form von modulierten Hochfrequenzsignalen über eine in den Figuren nicht dargestellte Modulationseinheit erfolgen, die mit der Fernansteuerung 3 verbunden und mit der Speiseelektronik 2 in Serie geschaltet ist, wobei die Fernansteuerung 3 Modulationssignale vorgibt, welche die Speiseelektronik 2 steuern. Die Modulationssignale werden dabei direkt über die Versorgungsleitung der Speiseelektronik 2 (sowie des Mittels 4) übertragen, wodurch kein weiteres Verbindungsmedium zwischen der Speiseelektronik 2 und der Fernansteuerung 3 notwendig ist.

In einer alternativen Ausführungsform sendet die Fernansteuerung 3 mittels einem Funkmodul und einem dieser zugeordneten Antenne Funksignale an die Speiseelektronik 2, womit die Lampe 1 gesteuert werden kann. Der Begriff "steuern" ist dabei nicht als einschränkend im Sinne der Unterscheidung zwischen "steuern" und "regeln" zu verstehen. Es kann daher auch eine Regelung (beispielsweise anhand der Spannung am Shuntwiderstand oder anhand einer Rückkopplung zwischen der Speiseelektronik 2 und der Fernansteuerung 3) vorgesehen sein.

Die Fernansteuerung 3 wird durch einen Benutzer über eine Benutzerschnittstelle, beispielsweise einen Touch-Screen oder eine Schalter-, Schieber- und Drehknopfanordnung bedient. Die Montage erfolgt in einfacher Weise gemeinsam mit den Mittel 4 sowie den optionalen Sicherungselement 8, die in Serie in den Stromkreis der Lampe 1 eingebracht werden. Die Speiseelektronik 2 der Lampe 1 kann dabei einerseits innerhalb der Lampe 1, insbesondere innerhalb eines Lampengehäuses oder eines Lampensockels der Lampe 1, oder andererseits außerhalb der Lampe 1 angeordnet sein. Die Speiseelektronik 2 kann ebenso zur Versorgung mehrerer Lampen 1 eingerichtet sein.

## Patentansprüche

1. Fernansteuerung (3) für zumindest eine Speiseelektronik (2) zumindest einer Lampe (1), wobei in einem der Lampe zugeordneten Lampengehäuse/Lampensockel ein Leuchtmittel untergebracht ist, **dadurch gekennzeichnet, dass** ein Mittel (4) zur Erzeugung eines Spannungsabfalls in Serie mit der Speiseelektronik (2) an eine Netzwechselspannung Un geschaltet ist und der Spannungsabfall zur Energieversorgung der Fernansteuerung (3) herangezogen ist.

2. Fernansteuerung (3) nach Anspruch 1, **dadurch gekennzeichnet, dass** das Mittel (4) zur Erzeugung eines Spannungsabfalls aus zumindest zwei antiparallel geschalteten Dioden oder aus zumindest zwei seriell in Gegenrichtung geschalteten Zenerdioden besteht.

3. Fernansteuerung (3) nach Anspruch 1, **dadurch gekennzeichnet, dass** das Mittel (4) zur Erzeugung eines Spannungsabfalls aus einer Zenerdiode besteht.

4. Fernansteuerung (3) nach Anspruch 1 oder 3, **dadurch gekennzeichnet, dass** das Mittel (4) zur Erzeugung eines Spannungsabfalls mit einem Gleichrichter verbunden ist, welcher einen Hochsetzsteller speist, welcher Hochsetzsteller mit der Fernansteuerung (3) verbunden ist.

5. Fernansteuerung (3) nach Anspruch 4, **dadurch gekennzeichnet, dass** der Gleichrichter ein Schottky-Dioden-Brückengleichrichter oder ein Mittelpunktgleichrichter ist.

6. Fernansteuerung (3) nach einem der Ansprüche 1 bis 5, **dadurch gekennzeichnet, dass** ein Schalter (S2) parallel zu dem Mittel (4) zur Erzeugung eines Spannungsabfalls geschaltet ist.

7. Fernansteuerung (3) nach einem der Ansprüche 1 bis 6, **dadurch gekennzeichnet, dass** die Fernansteuerung (3) einen wiederaufladbaren Energiespeicher aufweist.

8. Fernansteuerung (3) nach einem der Ansprüche 1 bis 7, **dadurch gekennzeichnet, dass** das Leuchtmittel zumindest eine LED aufweist.

9. Fernansteuerung (3) nach einem der Ansprüche 1 bis 8, **dadurch gekennzeichnet, dass** die Fernansteuerung (3) mehrere jeweils eine Speiseelektronik (2) umfassende Speiseelektronikeinheiten steuert, die jeweils einer Lampe (1) zugeordnet sind.

10. Fernansteuerung (3) nach einem der Ansprüche 1 bis 9, **dadurch gekennzeichnet, dass** die Speiseelektronik (2) innerhalb des Lampensockels angeordnet ist.

11. Fernansteuerung (3) nach einem der Ansprüche 1 bis 9, **dadurch gekennzeichnet, dass** die Speiseelektronik (2) innerhalb des Lampengehäuses angeordnet ist.

12. Fernansteuerung (3) nach einem der Ansprüche 1 bis 8, **dadurch gekennzeichnet, dass** eine Speiseelektronik (2) mit mehreren Lampen verbunden ist.

13. Fernansteuerung (3) nach einem der Ansprüche 1 bis 12, **dadurch gekennzeichnet, dass** die Fernansteuerung (3) ein Funkmodul mit einer Antenne beinhaltet und die zumindest eine Speiseelektronik (2) mittels Funksignalen steuert.

14. Fernansteuerung nach einem der Ansprüche 1 bis 12, **dadurch gekennzeichnet, dass** eine Modulationseinheit mit der Fernansteuerung (3) verbunden und mit zumindest einer Speiseelektronik (2) in Serie geschaltet und somit mit der zumindest einen Speiseelektronik (2) verbunden ist, wobei die Fernansteuerung (3) leitungsgebundene modulierten Hochfrequenzsignale der Modulationseinheit vorgibt, welche die zumindest eine Speiseelektronik (2) steuern.

15. Fernansteuerung nach einem der Ansprüche 1 bis 14, **dadurch gekennzeichnet, dass** ein Sicherungselement (8) mit dem Mittel (4) zur Erzeugung eines Spannungsabfalls sowie mit der Speiseelektronik (2) in Serie geschaltet ist.
